# EUROPÄISCHE PATENTANMELDUNG

(11) **EP 1 364 828 A2**
(43) Veröffentlichungstag der Anmeldung: **26.11.2003**
(21) Anmeldenummer: 03010769.2
(22) Anmeldetag: 14.05.2003
(51) Int. Cl.: B60P 1/00

(54) **Bauteil für einen Schubbodenanhänger**

(30) Priorität: 22.05.2002 DE 20207883 U
(71) Anmelder: Fliegl, Josef, 84513 Töging (DE)
(72) Erfinder: Fliegl, Josef, 84513 Töging (DE)
(74) Vertreter: Seidel, Herta, Dipl.-Phys.

(57) **Zusammenfassung**

Bauteil für einen Anhänger, der eine auf seiner Bodenfläche verschiebbare Teilbodenfläche aufweist, mit einer relativ zu dieser verschiebbaren Stirnwand, wobei längs der Teilbodenfläche (2) eine Führungsschiene (3) verläuft, längs der zwei durch einen Schiebezylinder (6) miteinander verbundene Klemmvorrichtungen (4,5) relativ zueinander und relativ zur Führungsschiene (3) verschiebbar angeordnet sind und die erste Klemmvorrichtung (5) mit der verschiebbaren Stirnwand (7) und dem Kolben (6b) des Schiebezylinders (6) und die zweite Klemmvorrichtung (4) mit dem Zylinder (6a) des Schiebezylinders (6) verbunden ist.

## Beschreibung

Die Erfindung betrifft ein Bauteil für einen Anhänger, der eine mit dem Fahrgestell verbundene Bodenfläche aufweist, umfassend eine relativ zur Bodenfläche des Anhängers auf dieser verschiebbare Teilbodenfläche, eine relativ zur verschiebbaren Teilbodenfläche verschiebbare Stirnwand und Betätigungsvorrichtungen für die Verschiebebewegungen von Teilbodenfläche und Stirnwand, wobei für die Verschiebung der Teilbodenfläche über die Bodenfläche des Anhängers ein erster Schiebezylinder vorgesehen ist, der einerseits mit der Teilbodenfläche verbunden und andererseits mit der Bodenfläche des Anhängers verbindbar ist und für die Verschiebung der Stirnwand längs der Teilbodenfläche ein zweiter Schiebezylinder vorgesehen ist, dessen Kolben mit der verschiebbaren Stirnwand und dessen Zylinder mit der Teilbodenfläche verbunden ist.

Ein solches Bauteil ist bereits aus dem deutschen Gebrauchsmuster Nr. 2981 8105.3 bekannt. Die Stirnwand wird in der bekannten Vorrichtung mittels eines Hydraulikzylinders verschoben, der ein mit der Stirnwand verbundenes Hebelgestänge betätigt. Diese Anordnung ist konstruktiv aufwendig. Verwendet man aber anstelle dieser Anordnung einen Teleskopzylinder, so stellt man fest, daß bei der in der Regel erforderlichen Hublänge die der Länge des Anhängers entsprechen muß, sich die Kolbenstange in der Mitte verbiegen kann. Darüber hinaus erfordert ein Teleskopzylinder eine hohe Leistung der Hydraulikpumpe des Schleppers. Solche Hydraulikanlagen sind aber nicht bei allen im Einsatz befindlichen Schleppern oder Traktoren vorhanden.

Der Erfinder hat sich nun die Aufgabe gestellt, eine rationelle Anordnung für die Verschiebung der Stirnwand zu schaffen, bei der der Hub des für den Verschiebevorgang erforderlichen Schiebezylinders gering ist, so daß die Nachteile eines Teleskopzylinders vermieden und kostengünstigere Hydraulikzylinder verwendet werden können.

Dies wird nach der Erfindung dadurch erreicht, daß längs der Teilbodenfläche eine Führungsschiene verläuft, längs der zwei durch den zweiten Schiebezylinder miteinander verbundene Klemmvorrichtungen relativ zueinander und relativ zur Führungsschiene verschiebbar angeordnet sind, wobei die erste Klemmvorrichtung mit der verschiebbaren Stirnwand und dem Kolben des zweiten Schiebezylinders und die zweite Klemmvorrichtung mit dem Zylinder des Schiebezylinders verbunden ist.

Durch diese Anordnung läßt sich folgender Arbeitsvorgang erreichen. Ist die mit der Stirnwand verbundene Klemmvorrichtung aus ihrem Eingriff mit der Führungsschiene gelöst und die andere Klemmvorrichtung fest auf der Führungsschiene arretiert, so wird die Stirnwand beim Ausfahren des Kolbens des zweiten Schiebezylinders um die Länge des Kolbenhubes der Teilbodenfläche verschoben. Wird anschließend die mit der Stirnwand verbundene Klemmvorrichtung auf der Führungsschiene arretiert und die andere aus ihrer Arretierung mit der Führungsschiene gelöst, dann läßt sich durch Verschieben dieser gelösten Klemmvorrichtung längs der Führungsschiene der Kolben des Schiebezylinders wieder einfahren. Durch Wiederholung dieses Vorgangs läßt sich in Schritten, die dem Kolbenhub des Hydraulikzylinders entsprechen, die Stirnwand längs der Teilbodenfläche verschieben. Auf einen Hydraulikzylinder mit großer Hublänge kann auf diese Weise verzichtet werden.

Will man die Stirnwand wieder in ihre ursprüngliche Lage zurückziehen, so verläuft der beschriebene Vorgang umgekehrt. Die mit der Stirnwand verbundene Klemmvorrichtung wird in der Führungsschiene arretiert, durch Ausfahren des Kolbens wird die aus ihrer Arretierung gelöste andere Klemmvorrichtung längs der Führungsschiene wieder ein Stück zum vorderen Ende der Teilbodenfläche verschoben. Durch anschließend erneute Lösung der mit der Stirnwand verbundenen Klemmvorrichtung und Arretierung der anderen Klemmvorrichtung wird der Kolben des Zylinders eingefahren und nimmt die Stirnwand über die mit ihr verbundene Klemmvorrichtung mit.

Einzelheiten über die vorzugsweise Ausbildung der Klemmvorrichtung ergeben sich aus den Unteransprüchen und der nachstehenden Beschreibung anhand der Zeichnung. Hierin zeigen
- Fig. 1: eine schematische Darstellung des erfindungsgemäßen Bauteils mit Klemmvorrichtungen.

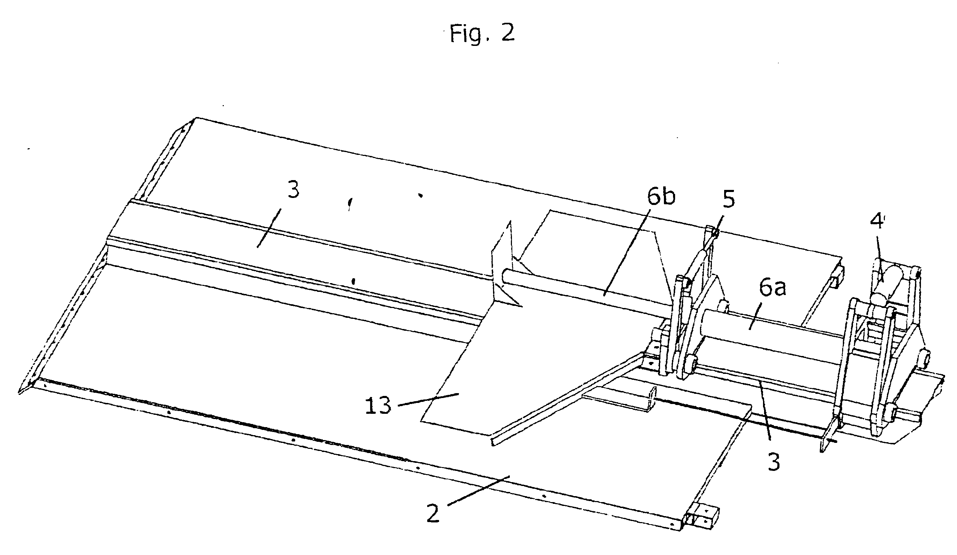

- Fig. 2: eine Ausführungsform des in Fig. 1 schematisch dargestellten Bauteils, ohne Stirnwand,
- Fig. 3: das erfindungsgemäße Bauteil in perspektivischer Darstellung bei ausgefahrenem Kolben des Schiebezylinders,
- Fig. 4: das erfindungsgemäße Bauteil in perspektivischer Darstellung bei eingefahrenem Kolben des Schiebezylinders,
- Fig. 5: eine Vorderansicht einer Ausbildung der Klemmvorrichtung,
- Fig. 6: eine perspektivische Darstellung der Klemmvorrichtung nach Fig. 5,
- Fig.7a: eine Darstellung des Klemmteiles der Klemmvorrichtung nach Fig. 5 in Offenstellung,
- Fig.7b: eine Darstellung des Klemmteiles der Vorrichtung nach Fig. 5 in Schließstellung,
- Fig. 8: eine weitere Ausbildung der Klemmvorrichtung in perspektivischer Darstellung, wobei die eine Klemmvorrichtung in Verschlußstellung und die andere Klemmvorrichtung in Offenstellung dargestellt ist.

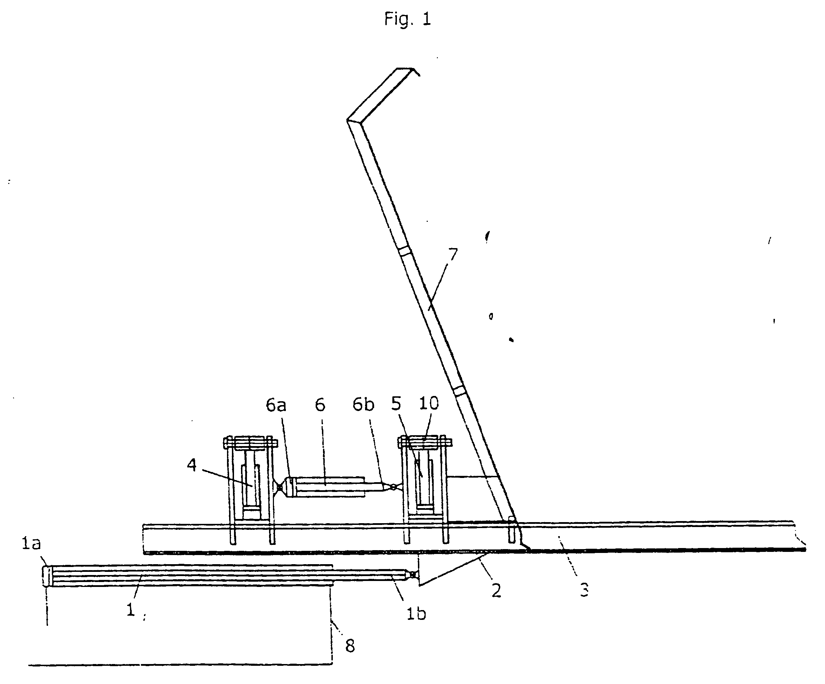

In Fig. 1 ist das Aufbauprinzip des erfindungsgemäßen Bauteiles lür Schiebeanhänger dargestellt. Ein Schiebezylinder 1 wird mit seinem verschlossenen Zylinderende 1a am nicht dargestellten festen Boden eines Schiebeanhängers angehängt. Sein Kolben 1b ist mit der Unterseite des Verschiebebodens 2 des Bauteils verbunden. Längs der Mittelachse des Verschiebebodens 2 verläuft eine Führungsschiene 3. Auf dieser sind zwei Klemmvorrichtungen 4 bzw. 5 verschiebbar angeordnet. Die beiden Klemmvorrichtungen 4 und 5 sind durch einen Schiebezylinder 6 so überbrückt, daß das geschlossene Ende des Zylinders 6a mit der Klemmvorrichtung 4 und das Ende des Kolbens 6b mit der Klemmvorrichtung 5 verbunden ist. Die Klemmvorrichtung 5 ist ferner mit einer Stirnwand 7 fest verbunden, die längs des Verschiebebodens 2 für die Entleerung des auf diesem Boden befindlichen Schüttgutes zum Auhängerende hin verschiebbar ist.

Ein Steuergerät 8, das die Tätigkeit der Hydraulikzylinder in zeitlicher Aufeinanderfolge steuert, ist ebenfalls am Bauteil vorgesehen.
Um ein auf dem Verschiebeboden 2 befindliches Schüttgut zum einen Ende hin zu verschieben, ergibt sich folgender Arbeitsablauf:
Mittels des Schiebezylinders 1 wird zunächst der Verschiebeboden 2 über etwa die Hälfte des festen Anhängerbodens zum hinteren Ende des Anhängers verschoben. Sodann wird die Klemmvorrichtung 4 auf der Führungsschiene 3 festgeklemmt. Die Klemmvorrichtung 5 wird aus ihrer Klemmstellung gelöst und der Kolben 6b des Schiebezylinders 6 wird ausgefahren. Dabei wird die Stirnwand 7 um eine Strecke, die der Hubstrecke des Kolbens entspricht, längs des Verschiebebodens 2 verschoben. Anschließend wird die Klemmvorrichtung 5 auf der Führungsschiene 3 festgeklemmt, die Klemmvorrichtung 4 aus ihrer Klemmstellung gelöst und der Zylinder 6a über den Kolben 6b eingefahren und erneut auf der Führungsschiene festgeklemmt. Dann wiederholt sich dieser Vorgang, d.h. die Klemmvorrichtung 5 wird wieder gelöst, die Klemmvorrichtung 4 erneut festgeklemmt, der Kolben 6b ausgefahren und die Stirnwand 7 um eine weitere Strecke längs des Verschiebebodens 2 verschoben. Die zeitliche Folge der Betätigungen des Schiebezylinders 6 und der für die Einstellungen der Klemmvorrichtungen 4 und 5 erforderlichen Arbeitszylinder 9 bzw. 10 erfolgt entweder mechanisch oder elektrisch ausgelöst und an die Steuervorrichtung 8 weitergeleitet.

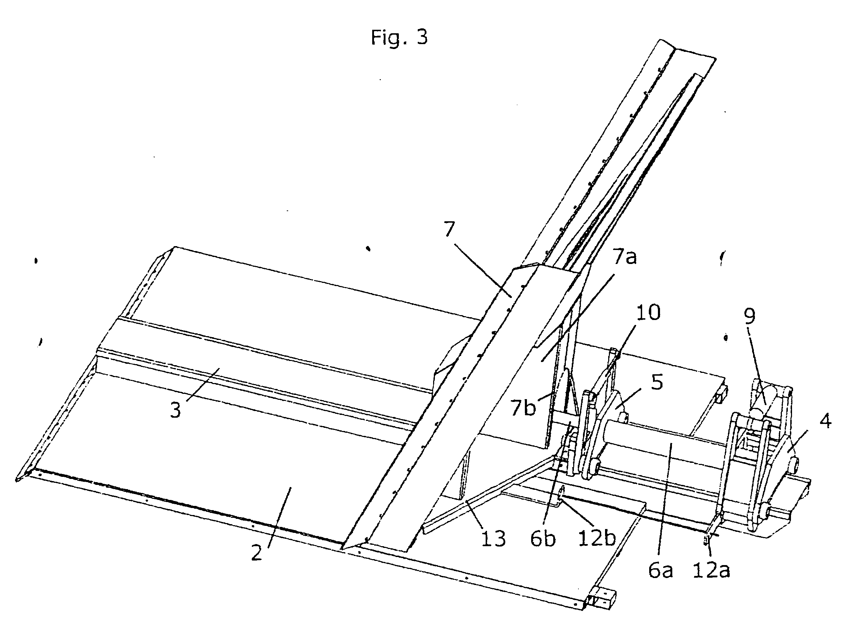

In Fig. 3 ist eine praktische Ausbildungsform des erfindungsgemäßen Bauteils dargestellt. Die Klemmvorrichtung 4 ist frei auf der Führungsschiene 3 verschiebbar. Ihr Arbeitszylinder 9 ist eingefahren, die Klemmteile 11, die nachstehend näher beschrieben werden, sind nicht in Eingriff mit der Führungsschiene 3. Die Klemmvorrichtung 5 ist dagegen in Klemmstellung. Ihr Arbeitszylinder 10 ist ausgefahren und hat ihre Klemmteile 11 in Eingriff mit der Führungsschiene 3 gebracht.

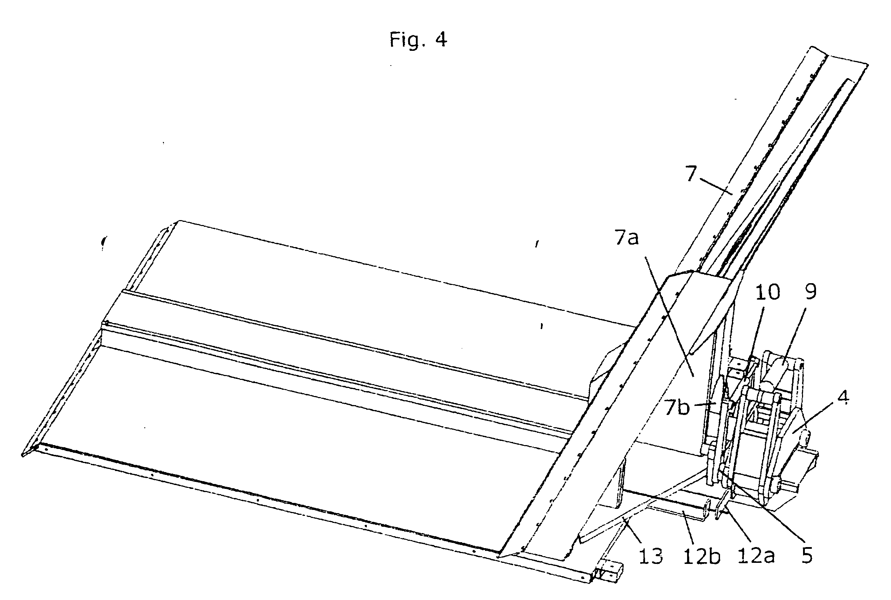

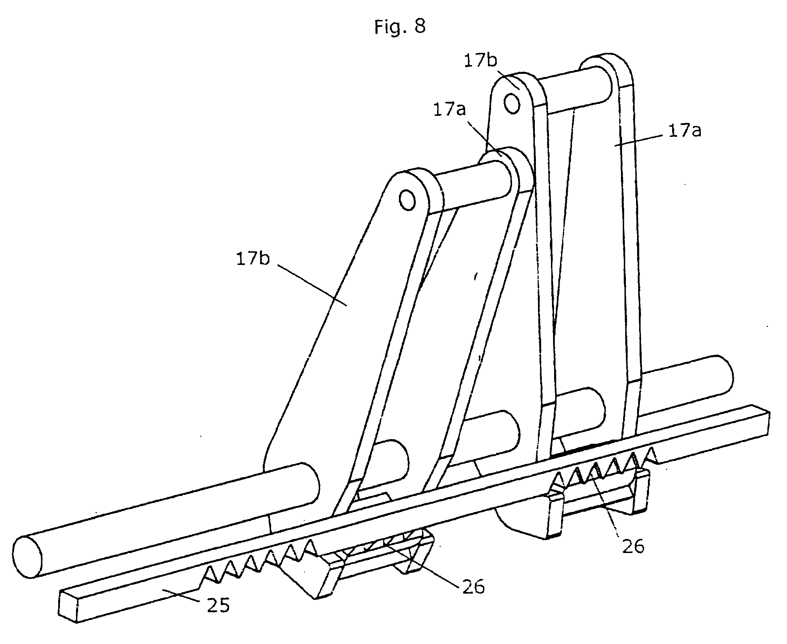

Die Klemmvorrichtung 5 ist über eine Patte 13 mit der Stirnwand 7 fest verbunden. Auch das freie Ende des Kolbens 6b ist mit der Stirnwand 7 über einen Arm 13b der Patte 13 mit der Stirnwand 7 fest verbunden. Durch eine Öffnung 16 in der Klemmvorrichtung 5 und in einem Halteteil 7a der Stirnwand 7 kann der Zylinder 6a mittels Verschieben der Klemmvorrichtung 4 hindurch geschoben werden. Die beiden Klemmvorrichtungen 5 und 4 nähern sich einander, bis ein Kontaktteil 12a die Klemmvorrichtung 4 in Kontakt mit einem Kontaktarm 12b an der Klemmvorrichtung 5 kommt. Diese Stellung ist in Fig. 4 gezeigt.
Es wird ein Impuls an das Steuergerät 8 geschickt, welches dafür sorgt, daß der Arbeitszylinder 10 einfährt, die Klemmvorrichtung 5 aus ihrem Eingriff mit der Führungsschiene 3 löst und die Klemmvorrichtung 4 durch Aussparen ihres Arbeitszylinders 9 in Klemmstellung mit der Führungsschiene 3 bringt.
Für die konstruktive Ausbildung der Klemmvorrichtungen 4 und 5 kennt man verschiedene Lösungen.

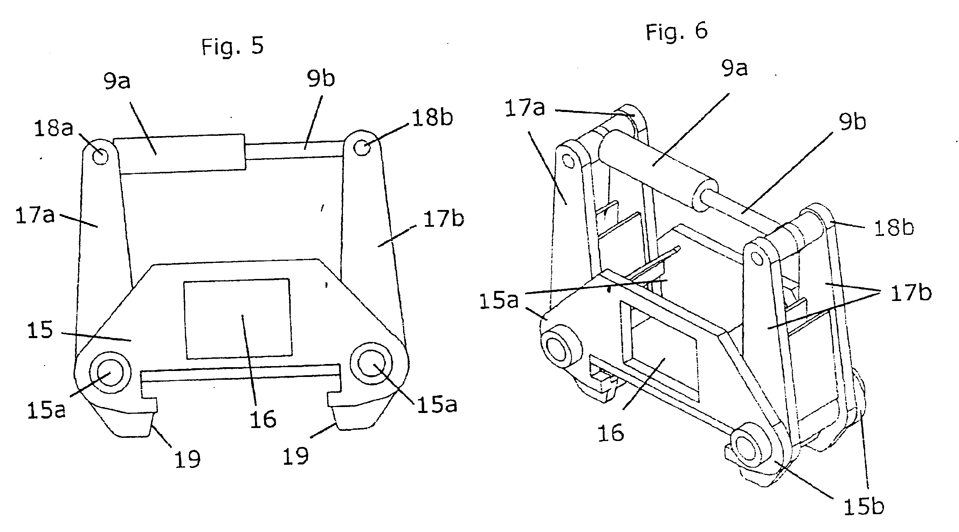

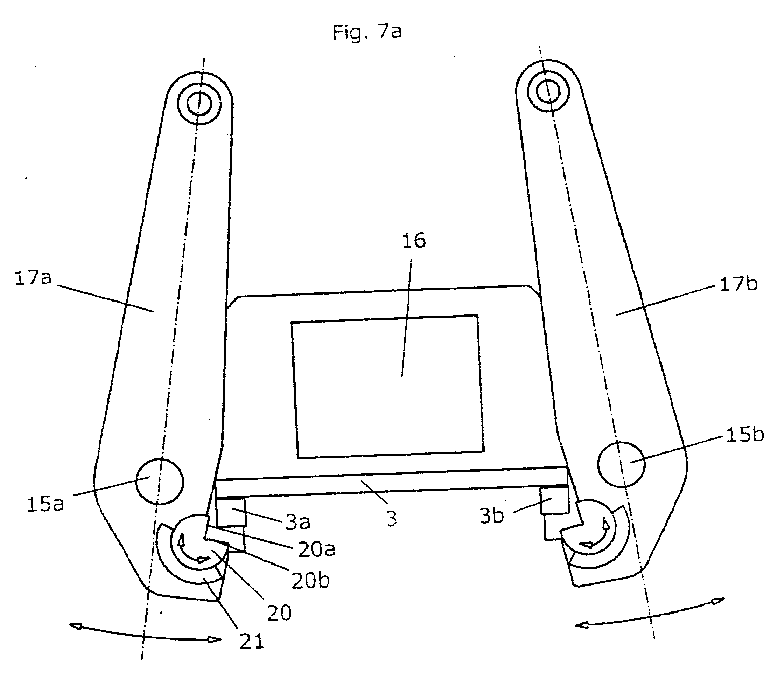

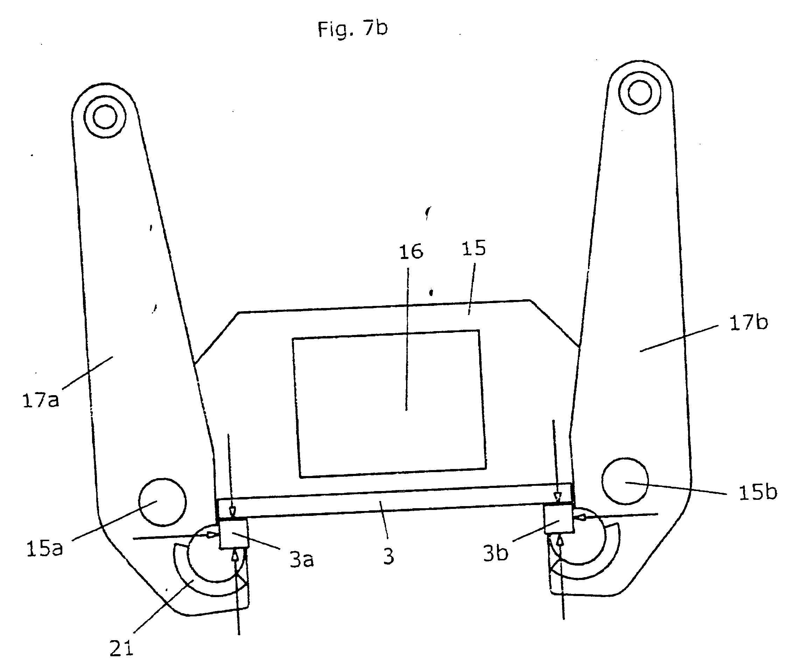

In Fig. 5 ist eine stirnseitige Ansicht eines Klemmteils 4 oder 5 dargestellt. Ein die Führungsschiene 3 überbrückendes Tragteil 15 mit einer mittig angeordneten Öffnung 16 für den Durchtritt des Schiebezylinders 6a trägt an seinen beiden unteren Enden 15a, b, gelenkig angeordnete Hebel 17a,b, die nach oben ragen. Ihre oberen Enden sind gelenkig bei 18a,b mit dem Ende des Arbeitszylinders 9a, bzw. 10a einerseits und andererseits mit dem Ende des Kolbens 9b bzw. 10b verbunden. Das gegenüberliegende untere Ende des Hebels 17a und b ist als Klemmteil 19 ausgebildet, das in den Fig. 7,b und 8 im einzelnen dargestellt ist.
In Fig. 6 ist die Klemmvorrichtung 4 bzw.5 in perspektivischer Darstellung gezeigt. Man erkennt, daß das Bauteil 15 zwei in Abständen zueinander angeordnete Platten 15a und 15b umfaßt, in denen die ebenfalls paarweise ausgebildeten Hebel 17a, b gehalten sind. In den Fig. 7a und 7b ist eine Ausbildung der Klemmteile 19 dargestellt. Das Klemmteil 19 befindet sich in Fig. 7a in Offenstellung und in Fig. 7b in Schließstellung. Das Klemmteil 19 umfaßt einen walzenförmigen Teil 20 mit einem rechtwinkligen Sektorenausschnitt 20a. Diese Walze 20 ist gelagert in einer dem Durchmesser der Walze 20 angepassten Schale 21. Beim Verschwenken des Hebelarmes 17a um das Gelenk 15a wird die Walze 20 in Schließstellung mit dem unteren Fortsatz 3a der Führungsschiene 3 hin bewegt. Sie bewegt sich in der Zeichnung schräg nach oben und dreht sich in der Schale 21 um ihre Mittelachse, bis sich die Flächen 20a und 20b flächig an die rechtwinkligen Kanten 3a der Führungsschiene 3 anlegen.
Eine weitere Ausbildung der Klemmteile 19 ist in Fig. 8 stark vergrößert dargestellt. Hierbei handelt es sich um eine Rasterführung der Klemmteile. Die Führungsschiene 3 ist bei dieser Ausbildung auf ihrer Unterseite in Form einer Zahnstange 25 ausgebildet. Die Hebelpaare 17a und 17b sind an ihrem unteren Ende durch Zahnstangen 26 miteinander verbunden. In Schließstellung pressen sich die Zahnstangen 26 an die Zahnstangen 25 der Führungsschiene 3 an.

## Patentansprüche

1. Bauteil für einen Anhänger, der eine mit dem Fahrgestell verbundene Bodenfläche aufweist, umfassend eine relativ zur Bodenfläche des Anhängers auf dieser verschiebbare Teilbodenfläche, eine relativ zur verschiebbaren Teilbodenfläche verschiebbare Stirnwand und Betätigungsvorrichtungen für die Verschiebebewegungen von Teilbodenfläche und Stirnwand, wobei für die Verschiebung der Teilbodenfläche über die Bodenfläche des Anhängers ein erster Schiebezylinder vorgesehen ist, der einerseits mit der Teilbodenfläche verbunden und andererseits mit der Bodenfläche des Anhängers verbindbar ist und für die Verschiebung der Stirnwand längs der Teilbodenfläche ein zweiter Schiebezylinder vorgesehen ist, dessen Kolben mit der verschiebbaren Stirnwand und dessen Zylinder mit der Teilbodenfläche verbunden ist, **dadurch gekennzeichnet, daß** längs der Teilbodenfläche (2) eine Führungsschiene (3) verläuft, längs der zwei durch den zweiten Schiebezylinder (6) miteinander verbundene Klemmvorrichtungen (4,5) relativ zueinander und relativ zur Führungsschiene (3) verschiebbar angeordnet sind, wobei die erste Klemmvorrichtung (5) mit der verschiebbaren Stirnwand (7) und dem Kolben (6b) des zweiten Schiebezylinders (6) und die zweite Klemmvorrichtung (4) mit dem Zylinder (6a) des Schiebezylinders (6) verbunden ist.

2. Bauteil nach Anspruch 1, **dadurch gekennzeichnet, daß** jede Klemmvorrichtung (4,5) einen quer zur Führungsschiene verlaufenden Klemmzylinder (9,10) umfaßt, dessen Kolben bzw. Zylinder gelenkig (18a, 18b) mit den gleichliegenden Enden von parallel zueinander, beidseitig der Führungsschiene (3) verlaufenden Hebelarmen (Hebelarmpaaren) (17a, 17b) verbunden sind, wobei die anderen Enden der Hebelarme als Klemmteile (18,19) ausgebildet sind, die beidseitig in die Führungsschiene (3) überbrückenden Tragteilen (15) in diesen schwenkbar (15a,15b) so angeordnet sind, daß die Klemmteile (18,19) der Hebelarme (17a,17b) durch Betätigung der Klemmzylinder (9 bzw. 10) in eine Klemmstellung mit der Führungsschiene (3) hinein oder aus dieser heraus zu bringen sind.

3. Bauteil nach Anspruch 1 oder 2, **dadurch gekennzeichnet, daß** die Klemmteile (18,19) in Klemmstellung mit der Führungsschiene (3) formschlüssig (Fig.8) in Eingriff stehen.

4. Bauteil nach Ansruch 1 oder 2, **dadurch gekennzeichnet, daß** die Klemmteile (18 o, 19) in Klemmstellung mit der Führungsschiene (3) kraftschlüssig (Fig. 7a) in Eingriff stehen.

5. Bauteil nach Anspruch 3, **dadurch gekennzeichnet, daß** die Führungsschiene (3) als Zahnstange (25) ausgebildet ist, in die die mit Zahnreihen (26) versehenen Klemmteile (18,19) in Klemmstellung einrasten.

6. Bauteil nach Anspruch 3, **dadurch gekennzeichnet, daß** in den Klemmteilen schwingend aufgchängte Rollen (20) angeordnet sind, die in Klemmstellung an die Führungsschiene (3) anpressbar sind.

7. Bauteil nach Anspruch 6, **dadurch gekennzeichnet, daß** die Rollen einen rechtwinkligen Sektorenausschnitt (20a,b) aufweisen, der sich in Klemmstellung flächenhaft an die rechtwinkligen Flanken der Führungsschiene (3) anlegt.

8. Bauteil nach einem der vorhergehenden Ansprüche, **dadurch gekennzeichnet, daß** der Verschiebevorgang der beiden Klemmvorrichtungen (4,5) elektrisch oder mechanisch steuerbar ist.

9. Bauteil nach einem der vorhergehenden Ansprüche, **dadurch gekennzeichnet, daß** die Klemmzylinder (9,10) der Klemmvorrichtungen (4,5) und der beide Klemmvorrichtungen verbindende zweite Schiebezylinder (6) und der erste Schiebezylinder (1) in einer gemeinsamen Steuervorrichtung (8) steuerbar sind

10. Bauteil nach einem der vorhergehenden Ansprüche, **dadurch gekennzeichnet daß** die Klemmvorrichtungen (4,5) Kontaktarme (12,12b) aufweisen, die in Kontaktstellung die Zylinder (1,6,9,10) steuern.
